# EUROPEAN PATENT SPECIFICATION

(11) **EP 1 237 212 B1**
(45) Date of publication and mention of the grant of the patent: **13.06.2007**
(21) Application number: 02251057.2
(22) Date of filing: 15.02.2002
(51) Int. Cl.: H01M 4/48, H01M 4/52

(54) **Use of lithium borate on non-aqueous rechargeable lithium batteries**
Verwendung von Lithium-borat in nichtwässrigen wiederaufladbaren Lithiumbatterien
Utilisation de borate de lithium dans les batteries non-aqueuses rechargeables au lithium

(30) Priority: 28.02.2001 US 795235; 26.11.2001 US 994142
(43) Date of publication of application: 04.09.2002
(73) Proprietor: E-One Moli Energy (Canada) Limited, Maple Ridge, British Columbia V2X 9E7 (CA)
(72) Inventor: Zhang, Meijie, Coquitlam, British Colombia V3K 1H8 (CA)
(74) Representative: Gray, John James

(56) References cited:
- EP-A- 1 032 061
- PATENT ABSTRACTS OF JAPAN vol. 1996, no. 12, 26 December 1996 (1996-12-26) -& JP 08 213016 A (SANYO ELECTRIC CO LTD), 20 August 1996 (1996-08-20)
- PATENT ABSTRACTS OF JAPAN vol. 1998, no. 14, 31 December 1998 (1998-12-31) -& JP 10 241682 A (MITSUBISHI CABLE IND LTD), 11 September 1998 (1998-09-11)
- PATENT ABSTRACTS OF JAPAN vol. 1997, no. 09, 30 September 1997 (1997-09-30) -& JP 09 115549 A (SANYO ELECTRIC CO LTD), 2 May 1997 (1997-05-02)

## Description

### FIELD OF THE INVENTION

The loss in delivered capacity upon cycling non-aqueous rechargeable lithium batteries can be reduced by treating the surface of the cathode powder with LiCoO₂-type structure with a small amount of lithium borate. This invention pertains to non-aqueous rechargeable lithium batteries and to methods for improving the performance thereof.

### BACKGROUND OF THE INVENTION

Many varied types of non-aqueous rechargeable lithium batteries are used commercially for consumer electronics applications. Typically, these batteries employ a lithium insertion compound as the active cathode material, a lithium compound of some sort (eg. pure lithium metal, lithium alloy, or the like) as the active anode material, and a non-aqueous electrolyte. An insertion compound is a material that can act as a host solid for the reversible insertion of guest atoms (in this case, lithium atoms).

Lithium ion batteries use two different insertion compounds for the active cathode and anode materials. Presently available lithium ion batteries are high voltage systems based on LiCoO₂ cathode and coke or graphite anode electrochemistries. However, many other lithium transition metal oxide compounds are suitable for use as the cathode material, including LiNiO₂ and LiMn₂O₄. Also, a wide range of carbonaceous compounds is suitable for use as the anode material. These batteries employ non-aqueous electrolytes comprising LiBF₄ or LiPF₆ salts and solvent mixtures of ethylene carbonate, propylene carbonate, diethyl carbonate, and the like. Again, numerous options for the choice of salts and/or solvents in such batteries are known to exist in the art.

The excellent reversibility of this insertion makes it possible for lithium ion batteries to achieve hundreds of battery cycles. However, a gradual loss of lithium and/or buildup of impedance can still occur upon such extended cycling for various reasons. This in turn typically results in a gradual loss in delivered capacity with cycle number. Researchers in the art have devoted substantial effort to reducing this loss in capacity. For instance, co-pending Canadian patent application serial number 2,150,877, filed June 2, 1995, and titled 'Use of P₂O₅ in Non-aqueous Rechargeable Lithium Batteries' discloses a mean for reducing this loss which involves exposing the electrolyte to P₂O₅. However, P₂O₅ shows at best only limited solubility in typical non-aqueous electrolytes and can be somewhat awkward to use in practice. Alternatives which are soluble may be more convenient, but it is unclear why such exposure is effective and hence what compounds might serve as effective alternatives.

B₂O₃ is a common chemical that is extensively used in the glass industry, and its properties are well known. B₂O₃ has also been used in the lithium battery industry for a variety of reasons. In most cases, the B₂O₃ is used as a precursor or reactant to prepare some other battery component. However, Japanese published patent application 07-142055 discloses that lithium batteries can show improved stability characteristics to high temperature storage when using lithium transition metal oxide cathodes, which contain B₂O₃. Also, co-pending Canadian patent application serial number 2,175,755, filed May 3, 1996, and titled 'Use of B₂O₃ additive in Non-aqueous Rechargeable Lithium Batteries' discloses that B₂O₃ additives can be used to reduce the rate of capacity loss with cycling in rechargeable lithium batteries and that this advantage can be obtained by having the additive dissolved in the electrolyte. However, the reason that the additive resulted in an improvement with cycling was not understood.

Co-pending Canadian patent application serial number 2,196,493, filed January 31, 1997, and titled 'Additives for Improving Cycle Life of Non-Aqueous Rechargeable Lithium Batteries' discloses a mean for reducing the rate of capacity loss with cycling, which involves exposing the electrolyte to trimethylboroxine (TMOBX). However, although TMOBX reduces the capacity fade rate, batteries comprising this compound have reduced thermal stability threshold.

Others have attempted to solve the problem of the loss of capacity with cycling by coating the surface of the cathode material with a boron compound. For instance, Sanyo's Japanese published patent application 09330720 disclosed lithium metal oxide cathodes for non-aqueous electrolyte batteries, which were coated with lithium and boron-containing compounds such as Li₃BN₂, LiB₃O₅, LiBO₂, Li₂B₄O₇. The coating was accomplished by mixing the cathode material with the boron-containing compounds in the ratio of 10:1 moles respectively. The mixture is then heated at the high temperature of 650°C. Improved cycle performance was claimed for batteries containing such cathode materials. Ultralife's United States patent serial No.5,928,812 also disclosed the use of many lithium-containing inorganic salts such as Li₂CO₃, LiF, Li₃PO₄, Li₂B₄O₇, LiBO₂ in lithium manganese oxide cathode. However, large amounts of these salts comparable to the amount of the electrolyte salt were disperse in the anode, separator and cathode to improve the shelf-life and the cycle life of the battery. These boron-containing salts were mixed with the cathode material without any heat treatment. A further Sanyo Electric Patent Japanese publication number 08-213016 teaches synthesizing an active Li-Mn oxide cathode material by reacting MnO₂ and LiOH and introcudes boron containing materials prior to synthesis of the active cathode material.

In contrast, the current invention improves the capacity fade rate of a non-aqueous rechargeable lithium battery by low temperature heat-treating the lithium transition metal oxide cathode surface with small amounts of lithium boron oxide.

### SUMMARY OF THE INVENTION

Rechargeable batteries exhibit a loss in delivered capacity as a function of the number of charge/discharge cycles. Herein, the fractional loss of capacity per cycle is referred to as the capacity fade rate. The instant invention includes non aqueous rechargeable lithium batteries having reduced fade rates and methods for achieving the reduced fade rate. Non-aqueous rechargeable lithium batteries generally comprise a lithium insertion compound cathode, a lithium compound anode, and a non-aqueous electrolyte comprising a lithium salt dissolved in a non-aqueous solvent. Heat treating the surface of the cathode powder with a small amount of lithium borate at low temperature can result in improved fade rate characteristics of non-aqueous rechargeable lithium batteries.

Improved fade rates can be achieved for batteries employing otherwise conventional lithium ion battery eletrochemistries are achieved by the teachings of claims 1 and 11. Thus, the cathode can be a lithium transition metal oxide with LiCoO₂ type structure, in particular the layered compound LiCoO₂ or LiNiCo1₋ₓO₂ (0≤ x ≤ 1) solid solutions. The anode can be a carbonaceous insertion compound anode, in particular graphite. The electrolyte can contain LiPF₆ salt dissolved in a cyclic and/or linear organic carbonate solvent, in particular mixtures containing ethylene carbonate, propylene carbonate, ethyl methyl carbonate, and/or diethyl carbonate solvents.

The cathode powder is prepared by mixing an aqueous lithium borate solution with a transition metal oxide cathode. The aqueous mixture is dried mildly, then heated at a relative low temperature of greater than or equal to 250°C to 450°C. Alternatively, a small amount of lithium borate and a transition metal oxide cathode are dry mixed thoroughly in a jar mill with media, then heated at a relative low temperature of greater than or equal to 250°C to 450°C. A low heating temperature is preferable. A sufficiently small amount of lithium borate is mixed with the cathode powder such that other desirable bulk properties such as the specific capacity of the material are not adversely affected. Treating the cathode powder with lithium borate in the range of greater than 0.01 %, but less than 2% of the weight of the cathode powder is effective in reducing the capacity fade rate of the battery.

### BRIEF DESCRIPTION OF THE DRAWINGS

Figure 1 depicts a cross-sectional view of a preferred embodiment of a cylindrical spiral-wound lithium ion battery.\
Figure 2 shows the Discharge Energy in Watt-hour (Wh) versus Cycle Number data for an 18650 size battery comprising LiBO₂ treated LiCoO₂ (aqueous treatment) compared to a control cell comprising untreated LiCoO₂.
Figure 3 shows the Discharge Energy in Watt-hour (Wh) versus Cycle Number data for an 18650 size battery comprising LiBO₂.2H₂O treated LiCoO₂ (dry-mix treatment) compared to a control cell comprising untreated LiCoO₂.
Figure 4 shows the Discharge Energy in Watt-hour (Wh) versus Cycle Number data for the series of LiCoO₂ cathode based 18650 size batteries comprising 0.01%, 0.1%, and 0.15% LiBO₂ in the cathode (aqueous treatment).
Figure 5 shows the Discharge Energy in Watt-hour (Wh) versus Cycle Number data for a series of LiCoO₂ cathode based 18650 size batteries, where the mixture of LiCoO₂ and LiBO₂ was heated at either 250°C or 450°C or 650°C (aqueous treatment).
Figure 6 shows the Discharge Energy in Watt-hour (Wh) versus Cycle Number data for a series of LiCoO₂ cathode based 18650 size batteries, where the mixture of LiCoO₂ and 0.15% LiBO₂ was heated at 600°C (dry-mix treatment) compared to a control cell comprising untreated LiCoO₂.
Figure 7 shows the Discharge Energy in Watt-hour (Wh) versus Cycle Number data for the series of LiCoO₂ cathode based 18650 size batteries, comprising LiCoO₂ blended with LiBO₂ powder, but not heat treated.
Figure 8 shows the Discharge Energy in Watt-hour (Wh) versus Cycle Number data for the series of LiCoO₂ cathode based 18650 size batteries, where LiCoO₂ was synthesized with and without LiBO₂.

### DETAILED DESCRIPTION OF SPECIFIC EMBODIMENTS OF THE INVENTION

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

We have discovered that capacity fade rate characteristic of non-aqueous lithium rechargeable batteries can be improved by using cathode materials made from surface treated transition metal oxide cathode powder with LiCoO₂ type structure. The treatment consists of mixing a small amount of lithium borate with the cathode powder, then heating the mixture.

One of the methods consists of mixing an aqueous lithium borate solution with LiCoO₂, then the mixture is dried initially at 95°C for 1.5 hours and finally at greater than or equal to 250°C to 450°C for 1.5 hours under air. Another method consists of dry-mixing a small amount of lithium borate and the transition metal oxide cathode powder in a jar mill with media for 1 hour, then heating at greater than or equal to 250°C to 450°C. All heatings are performed in a box furnace (Thermcraft Incorporated). Preferably a low heating temperature is employed, so that no detrimental effect occurs to the original cathode powder. A sufficiently small amount of lithium borate is mixed with the cathode powder such that other desirable bulk properties of the battery are not adversely affected. Treating the cathode powder with lithium borate in the range of greater than 0.01 %, but less than 2% of the weight of the cathode powder is effective in reducing the capacity fade rate of the battery.

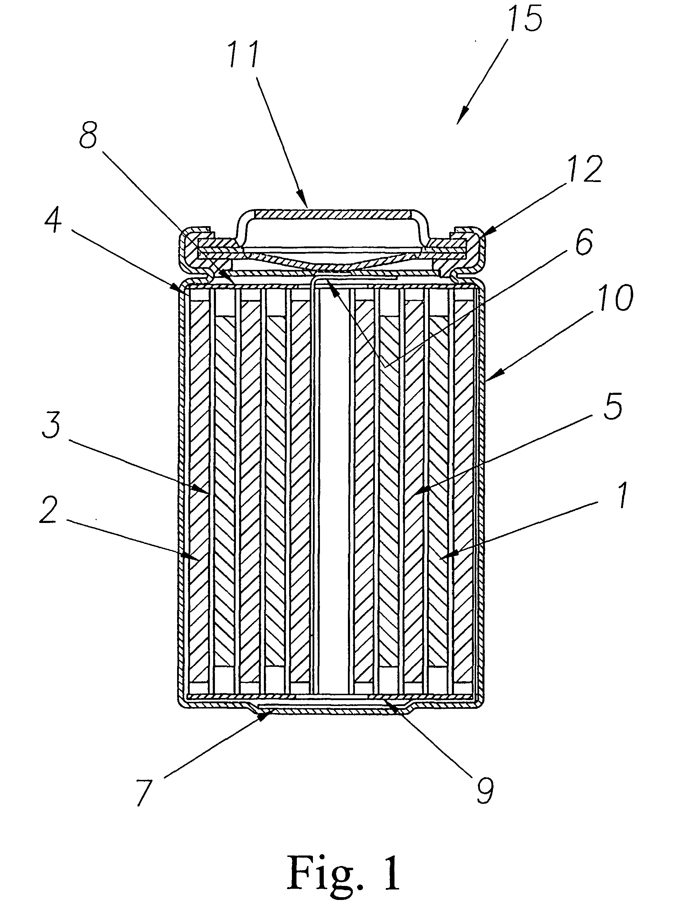

The cathode can be a lithium transition metal oxide with LiCoO₂ type structure, in particular the layered compound LiCoO₂ or LiNiₓCo₁₋ₓO₂ (0 ≤ x ≤ 1) solid solutions. The anode can be a lithium compound. Possible anode lithium compounds include lithium metal, lithium alloys, and lithium insertion compounds. Preferred embodiments are lithium ion batteries wherein the anode is also a lithium insertion compound. Preferred electrolytes for lithium ion batteries comprise LiPF₆ salt dissolved in a mixture of non-aqueous cyclic and/or linear organic carbonate solvents (such as ethylene carbonate, propylene carbonate, ethyl methyl carbonate, diethyl carbonate, and/or dimethyl carbonate). The invention relates to battery constructions with cathodes comprising a cathode powder, such as LiCoO₂, which has been surface treated with a small amount of lithium borate. Various battery configurations are suitable, including prismatic formats or miniature coin cells. A preferred conventional construction for a lithium ion type product is depicted in the cross-sectional view of a spiral-wound battery in Figure 1. A jelly roll 4 is created by spirally winding a cathode foil 1, an anode foil 2, and two microporous polyolefin sheets 3 that act as separators.

Cathode foils are prepared by applying a mixture of a suitable powdered (about 10 micron size typically) cathode material, such as a lithiated transition metal oxide, a binder, and a conductive dilutant onto a thin aluminum foil. Typically, the application method first involves dissolving the binder in a suitable liquid carrier. Then, a slurry is prepared using this solution plus the other powdered solid components. The slurry is then coated uniformly onto the substrate foil. Afterwards, the carrier solvent is evaporated away. Often, both sides of the aluminum foil substrate are coated in this manner and subsequently the cathode foil is calendered.

Anode foils are prepared in a like manner except that a powdered (also typically about 10 micron size) carbonaceous insertion compound is used instead of the cathode material and thin copper foil is usually used instead of aluminum. Anodes are typically slightly wider than the cathode in order to ensure that there is always anode opposite cathode.

The jelly roll 4 is inserted into a conventional battery can 10. A header 11 and gasket 12 are used to seal the battery 15. The header may include safety devices if desired such as a combination safety vent and pressure operated disconnect device. Additionally, a positive thermal coefficient device (PTC) may be incorporated into the header to limit the short circuit current capability of the battery. The external surface of the header 11 is used as the positive terminal, while the external surface of the can 10 serves as the negative terminal.

Appropriate cathode tab 6 and anode tab 7 connections are made to connect the internal electrodes to the external terminals. Appropriate insulating pieces 8 and 9 may be inserted to prevent the possibility of internal shorting.

Prior to crimping the header 11 to the can 10 and sealing the battery, the electrolyte 5 is added to fill the porous spaces in the jelly roll 4.

At this point, the battery is in a fully discharged state. Generally, an electrical conditioning step, involving at least a single complete recharge of the battery, is performed immediately after assembly. One of the reasons for so doing is that some initial irreversible processes take place during this first recharge. For instance, a small amount of lithium is irreversibly lost during the first lithiation of the carbonaceous anode.

The advantages of the invention can be achieved using small amounts of lithium borate to treat the surface of the cathode powder. In the examples to follow, desirable results were obtained using on the order of 0.01% to 0.15% lithium borate by weight of the cathode powder. Reduced cell capacity can be expected if excessive amounts of lithium borate are employed. Therefore, some straightforward quantification trials were required in order to select an appropriate amount lithium borate to use.

At this time, the reason for the fade rate improvement using lithium borate is unclear. Without being adversely bound by theory, but wishing to enable the reader to better understand the invention, a possible explanation is that during the low temperature heating, lithium borate is dispersed on the surface of LiCoO₂ where it has a stabilizing effect, thereby reducing the capacity fade rate.

The term 'lithium borate' is used herein to refer to any lithium-boron-oxide compound including LiBO₂, LiB₃O₅, Li₂B₄O₇ and hydrates thereof. Mixtures of lithium and boron compounds that react or decompose to form lithium borate compounds at temperatures of greater or equal to 250°C to 450°C can also be expected to provide similar benefits.

The following Examples are provided to illustrate certain aspects of the invention but should not be construed as limiting in any way. 18650 size cylindrical batteries (18 mm diameter, 65 mm height) were fabricated as described in the preceding and shown generally in Figure 1. Cathodes 1 comprised a mixture of lithium borate-surface-treated-transition metal oxide powder, a carbonaceous conductive dilutant, and polyvinylidene fluoride (PVDF) binder that was uniformly coated on both sides of a thin aluminum foil. The transition metal oxides used was LiCoO₂ as indicated below. Anodes 2 were made using a mixture of a spherical graphitic powder plus Super S (trademark of Ensagri) carbon black and PVDF binder that was uniformly coated on thin copper foil. Celgard 2300^{®} microporous polyolefin film was used as the separator 3.

The electrolytes 5 employed were solutions of 1M LiPF₆ salt dissolved in a solvent mixture of ethylene carbonate (EC), propylene carbonate (PC), and diethyl carbonate (DEC) solvents in a volume ratio of 30/20/50 respectively.

To protect against hazardous conditions on overcharge of the battery, the header of these batteries included a pressure operated electrical disconnect device. The electrolytes employed also contained 2.5 % biphenyl additive by weight to act as a gassing agent for purposes of activating the electrical disconnect device (in accordance with the disclosure in co-pending Canadian Patent Application Serial No. 2,163,187, filed November 17, 1995, titled 'Aromatic Monomer Gassing Agents for Protecting Non-aqueous Lithium Batteries Against Overcharge', by the same applicant).

For the examples that follow, note that the control batteries employ LiCoO₂ as received from the manufacturers. For each of the examples below one distinct batch of LiCoO₂ powder was used to prepare all the treated LiCoO₂ powders described within that example. Different examples may use different batches of LiCoO₂.

### Example I - cathodes with LiBO₂ treated LiCoO₂

LiCoO₂ cathode based 18650 batteries were assembled using LiCoO₂ treated with aqueous 0.05 % LiBO₂. The treatment consisted of first dispersing 0.4g of LiBO₂ powder in about 210mL of water and stirring for about 10 minutes. The solution turns cloudy as LiBO₂ is not so soluble. About 800g of LiCoO₂ was then added to this solution and stirred for an additional 10 minutes. The mixture was then dried initially at 95°C for about 1.5 hours and finally at 250°C for 1.5 hours under air. Heating was performed in a box furnace from Thermcraft Incorporated.

For electrical testing, the batteries were thermostatted at 21 ±1 °C. Cycling was performed using 1.5A constant voltage recharge for 2.5 hours to 4.2V and 1.65A constant current discharge to 2.5V cutoff. Note that for purposes of observing changes in battery impedance, a prolonged, low rate charging or discharging was performed every 10 cycles (alternating between charging and discharging). Subsequent discharge capacities may then be significantly different from the previous ones. These points have been omitted from the data presented below for purposes of clarity. However, this type of testing can introduce a noticeable discontinuity in the capacity versus cycle number data curves.

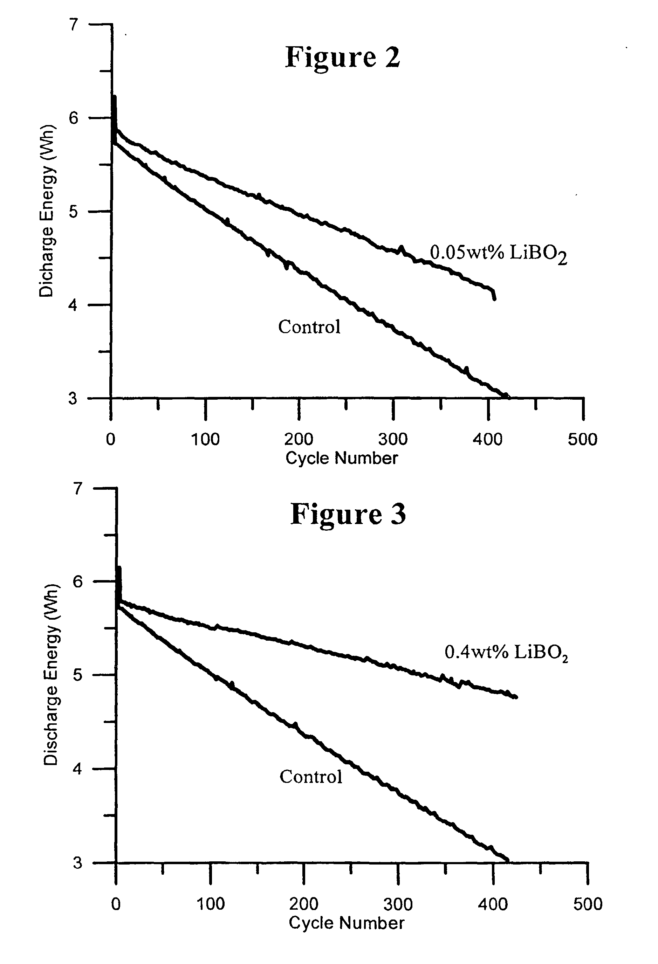

The batteries with treated LiCoO₂ are compared with control batteries in Figure 2, where discharge energy (Wh) versus cycle number data for each battery is plotted. The capacity fade rate of batteries with LiBO₂-surface treated cathode material is superior to the control batteries.

Similarly but using the dry-mix treatment, LiCoO₂ cathode based 18650 batteries were assembled using LiCoO₂ treated with 0.4% LiBO₂.2H₂O by weight of the cathode powder. LiCoO₂and LiBO₂.2H₂O were thoroughly dry-mixed in a jar mill with media for 1 hour, then heated at 250°C in a furnace (Thermcraft Incorporated) for 1.5 hours under air. The batteries were then cycled as described above. Figure 3 shows the discharge energy (Wh) versus cycle number data for each battery. The capacity fade rates of the surface treated cathode batteries were better than the control batteries.

This example shows that the aqueous and the dry-mix treatments of LiCoO₂ with lithium borate improve the capacity fade rate.

### Example II - cathodes treated with different amounts of LiBO2

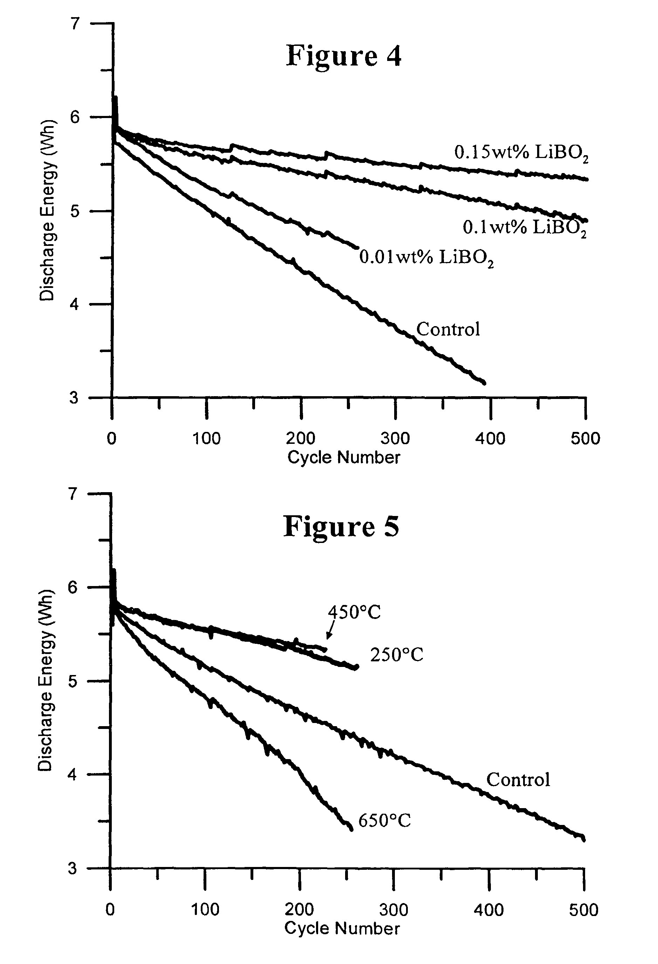

Another series of LiCoO₂ cathode based 18650 batteries were assembled with cathodes comprising LiCoO₂ heat treated with various amounts of LiBO₂. The same aqueous treatment procedure was followed as for Example I, except that the amounts of LiBO₂ were 0.01%, 0.1% and 0.15% LiBO₂ by weight of LiCoO₂ powder. The batteries were cycled as in Example I. Figure 4 shows the discharge energy (Wh) versus cycle number data for each battery. The capacity fade rate of all the batteries containing cathode material treated with LiBO₂ was better than the controls. The improvement was most prominent for the 0.1% and 0.15% LiBO₂ batteries.

### Example III - cathodes treated with LiBO₂ heated at 250°C, 450°C or 650°C (aqueous treatment)

Cylindrical 18650 batteries were assembled with cathodes comprising LiCoO₂ heat treated with 0.15% LiBO₂ by weight of the cathode powder. The same aqueous treatment procedure was followed as for Example I, except one batch of cathode powder had the final heating temperature at 250°C, another at 450°C and yet another at 650°C. The batteries were cycled as described in Example I. Figure 5 shows the discharge energy (Wh) versus cycle number data for each battery. The batteries with cathode powder heated at 650°C had worse capacity fade rate than either the control or the batteries with cathode powder heated at 250°C or at 450°C. The capacity fade rates of the 250°C and 450°C treated LiCoO₂ batteries were similar and substantially improved over that of the controls. This example shows that excessive heating temperature during the surface treatment is undesirable.

### Example IV - cathodes treated with LiBO₂ heated at 600°C (dry-mix treatment)

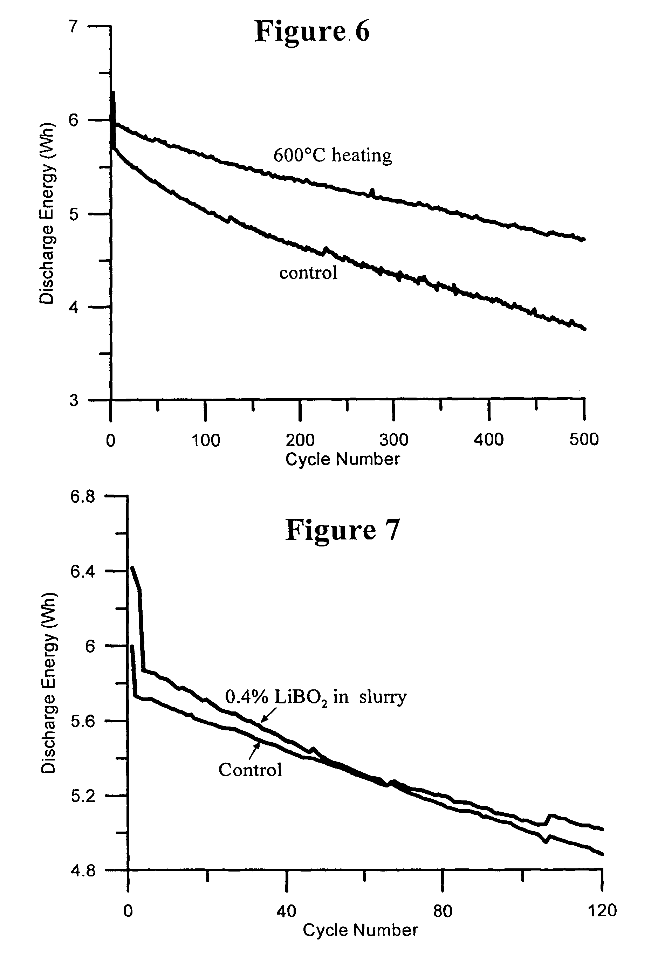

Cylindrical 18650 batteries were assembled with cathodes comprising LiCoO₂ heat treated with 0.15%LiBO₂ by weight of the cathode powder. The same dry-mix treatment procedure was followed as for Example I, except the cathode powder was heated at 600°C instead of 250°C. The batteries were cycled as described in Example I. Figure 6 shows the discharge energy (Wh) versus cycle number data for the batteries. The capacity fade rate of the LiBO₂ treated LiCoO₂ batteries were better than the controls. This example shows that the dry-mixing and heating LiCoO₂ and a small amount of LiBO₂ at 600°C also improved the capacity fade rate.

### Comparative Example I - cathodes with LiCoO₂ and LiBO₂, blended but not heat treated

Cylindrical 18650 batteries were assembled with cathodes comprising LiCoO₂ mixed with 0.4%LiBO₂ by weight of the cathode powder, but not heat treated. The LiBO₂ was blended with LiCoO₂ and the mixture was used as the cathode powder. The batteries were cycled as described in Example I. Figure 7 shows the discharge energy (Wh) versus cycle number data for each battery. The capacity fade rate of batteries made with the blended powder and the control batteries were about the same. No improvement was observed. This example shows that prior art methods of preparing the cathode powder by blending LiBO₂ and LiCoO₂ do not improve the capacity fade rate.

### Comparative Example II - cathodes with LiBO₂ included during synthesis of LiCoO2

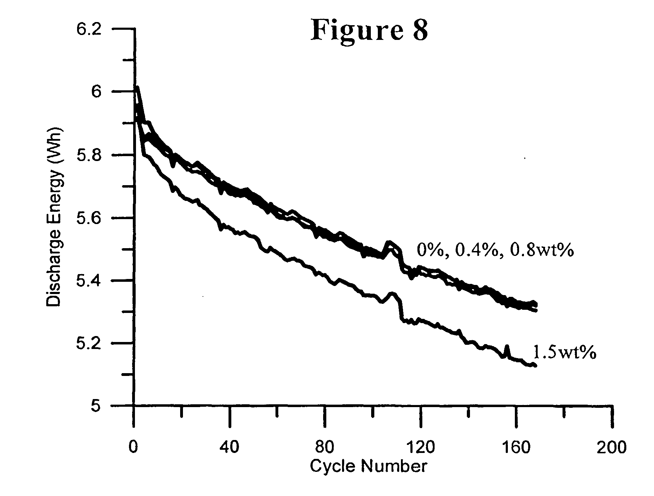

Cylindrical 18650 batteries were assembled with cathodes comprising LiCoO₂ synthesized with various amounts of LiBO₂. LiCoO₂ was prepared from a stoichiometric mixture of Li₂CO₃ and Co₃O₄ with various amounts of LiBO₂ (0.4%, 0.8%, 1.5% by weight of the LiCoO₂ product) included in the reaction mix The powders were blended, jar-milled for 1 hr, then heated in a box furnace at 850°C for 2 hours under air. The product was ground and sifted through a 100 mesh screen; further heated at 850°C for 8 hours under air, then finally ground and sifted through a 200 mesh screen. The LiCoO₂ synthesized with various amounts of LiBO₂ was used to prepare cathodes which were assembled into batteries, which were cycled as described in Example I. Figure 8 shows the discharge energy (Wh) versus cycle number data for each battery. The capacity fade rate of both the synthesized powders and the control batteries were about the same. No improvement in the capacity fade was observed by the addition of LiBO₂ in the synthesis of LiCoO₂. This example shows that prior art methods of preparing LiCoO₂ with LiBO₂ included in the reaction mix does not improve the capacity fade rate.

The preceding examples demonstrate that surface treatment of LiCoO₂ with a small amount of lithium borate can improve the capacity fade rate of non-aqueous rechargeable lithium batteries.

## Claims

1. A non-aqueous rechargeable lithium battery (15) having reduced capacity fade rate during cycling, the battery including a lithium insertion compound cathode (1), a lithium or lithium compound anode (2), a separator (3), a non-aqueous electrolyte including a lithium salt dissolved in a non-aqueous solvent, and an amount of lithium borate dispersed on the surface of the active cathode material **characterized in that**
the lithium insertion compound cathode is a lithium transition metal oxide cathode with LiCoO₂ type structure;
lithium borate is mixed with the lithium insertion compound cathode material and heated to a temperature in the range between 250°C and 450°C, to obtain the said cathode; and
the amount of lithium borate is greater than about 0.01%, but less than 2% of the weight of the lithium insertion compound cathode.

2. A non-aqueous rechargeable lithium battery as claimed in claim 1 wherein the lithium transition metal oxide is a member of the solid solution series LiNiₓCo₁₋ₓO₂ (0 ≤ x ≤ 1).

3. A non-aqueous rechargeable lithium battery as claimed in claim 1 wherein the lithium transition metal oxide is LiCoO₂

4. A non-aqueous rechargeable lithium battery as claimed in any preceding claim, wherein an aqueous lithium borate solution is mixed with the lithium insertion compound cathode.

5. A non-aqueous rechargeable lithium battery as claimed in any of claims 1to 3, wherein a small amount of lithium borate and the lithium insertion compound cathode are dry- mixed in a jar mill with media.

6. A non-aqueous rechargeable lithium battery as claimed in any preceding claim, wherein the anode comprises a carbonaceous insertion compound.

7. A non-aqueous rechargeable lithium battery as claimed in claim 6, wherein the carbonaceous insertion compound is graphite.

8. A non-aqueous rechargeable lithium battery as claimed in any preceding claim, wherein the lithium salt is LiPF₆.

9. A non-aqueous rechargeable lithium battery as claimed in any preceding claim, wherein the non-aqueous solvent comprises a cyclic and/or linear organic carbonate.

10. A non-aqueous rechargeable lithium battery as claimed in claim 9, wherein the non-aqueous solvent is a mixture of ethylene carbonate, propylene carbonate, diethyl carbonate, ethyl methyl carbonate, and dimethyl carbonate.

11. A method for reducing the capacity fade rate during cycling of a non-aqueous rechargeable lithium battery, the battery having a lithium insertion compound cathode, a lithium or lithium compound anode, a separator, and a non-aqueous electrolyte including a lithium salt dissolved in a non-aqueous solvent, and an amount of lithium borate in the cathode, **characterised in that**: the lithium insertion compound cathode is provided as a lithium transition metal cathode with LiCoO₂, type structure and the lithium borate is mixed with the lithium transition metal oxide cathode and heated to a temperature in the range between 250°C and 450°C and the amount of lithium borate is greater than about 0.01%, but less than 2% of the weight of the lithium transition metal oxide cathode.

12. A method as claimed in claim 11 wherein the lithium transition metal oxide is selected from the solid solution series LiNiₓCo₁₋ₓO₂ (0 ≤ x ≤ 1).

13. A method as claimed in claim 11 wherein the lithium transition metal oxide is LiCoO₂.

14. A method as claimed in any of claims 11 to 13 wherein an aqueous lithium borate solution is mixed with the lithium insertion compound cathode.

15. A method as claimed in any of claims 11 to 13 wherein a small amount of lithium borate is dry-mixed in a jar mill with media with the lithium insertion compound cathode.

16. A method as claimed in any of claim 11 to 15 wherein the anode comprises a carbonaceous insertion compound.

17. A method as claimed in claim 16 wherein the carbonaceous insertion compound is graphite.

18. A method as claimed in any of claims 11 to 17 wherein the lithium salt is LiPF₆.

19. A method as claimed in any of claims 11 to 18 wherein the non-aqueous solvent comprises a cyclic and/or linear organic carbonate.

20. A method as claimed in claim 19 wherein the non-aqueous solvent is a mixture of ethylene carbonate, propylene carbonate, diethyl carbonate, ethyl methyl carbonate, and dimethyl carbonate.

## Patentansprüche

1. Eine nichtwässerige wiederaufladbare Lithiumbatterie (15) mit einer reduzierten Rate der Kapazitätsabnahme während der Zyklen, wobei die Batterie eine
Lithiumeinfügungsverbindungskathode (1), eine Lithium- oder Lithiumverbindungsanode (2), einen Scheider (3), eine nichtwässerige Füllsäure einschließlich eines Lithiumsalzes, das in einem nichtwässerigen Lösungsmittel gelöst ist, und eine Menge an Lithiumborat, das auf der Oberfläche des aktiven Kathodenmaterials dispergiert wird, umfasst, **dadurch gekennzeichnet, dass**
die Lithiumeinfügungsverbindungskathode eine Lithiumübergangsmetalloxidkathode mit einer Struktur des Typs LiCoO₂ ist;
Lithiumborat mit dem Material der Lithiumeinfügungsverbindungskathode gemischt und auf eine Temperatur im Bereich zwischen 250 °C und 450 °C erhitzt wird, um die Kathode zu erhalten; und
die Menge an Lithiumborat größer als ungefähr 0,01 %, aber weniger als 2 % des Gewichts der Lithiumeinfügungsverbindungskathode ist.

2. Nichtwässerige wiederaufladbare Lithiumbatterie gemäß Anspruch 1, wobei das Lithiumübergangsmetalloxid ein Element der feste Lösung-Serie LiNiₓCo₁₋ₓO₂ (0 ≤ x ≤ 1) ist.

3. Nichtwässerige wiederaufladbare Lithiumbatterie gemäß Anspruch 1, wobei das Lithiumübergangsmetalloxid LiCoO₂ ist.

4. Nichtwässerige wiederaufladbare Lithiumbatterie gemäß einem der vorhergehenden Ansprüche, wobei eine wässerige Lithiumboratlösung mit der Lithiumeinfügungsverbindungskathode gemischt wird.

5. Nichtwässerige wiederaufladbare Lithiumbatterie gemäß einem der Ansprüche 1 bis 3, wobei eine kleine Menge an Lithiumborat und die LIthiumeinfügungsverbindungskathode in einer Kugelmühle mit Medien trocken gemischt werden.

6. Nichtwässerige wiederaufladbare Lithiumbatterie gemäß einem der vorhergehenden Ansprüche, wobei die Anode eine kohlenstoffhaltige Einfügungsverbindung beinhaltet.

7. Nichtwässerige wiederaufladbare Lithiumbatterie gemäß Anspruch 6, wobei die kohlenstoffhaltige Einfügungsverbindung Graphit ist.

8. Nichtwässerige wiederaufladbare Lithiumbatterie gemäß einem der vorhergehenden Ansprüche, wobei das Lithiumsalz LiPF₆ ist.

9. Nichtwässerige wiederaufladbare Lithiumbatterie gemäß einem der vorhergehenden Ansprüche, wobei das nichtwässerige Lösungsmittel ein zyklisches und/oder lineares organisches Carbonat beinhaltet.

10. Nichtwässerige wiederaufladbare Lithiumbatterie gemäß Anspruch 9, wobei das nichtwässerige Lösungsmittel eine Mischung aus Ethylencarbonat, Propylencarbonat, Diethylcarbonat, Ethylmethylcarbonat und Dimethylcarbonat ist.

11. Ein Verfahren zum Reduzieren der Rate der Kapazitätsabnahme während der Zyklen einer nichtwässerigen wiederaufladbaren Lithiumbatterie, wobei die Batterie eine Lithiumeinfügungsverbindungskathode, eine Lithium- oder Lithiumverbindungsanode, einen Scheider, und eine nichtwässerige Füllsäure einschließlich eines Lithiumsalzes, das in einem nichtwässerigen Lösungsmittel gelöst ist, und eine Menge an Lithiumborat in der Kathode umfasst, **dadurch gekennzeichnet, dass** die Lithiumeinfügungsverbindungskathode als eine Lithiumübergangsmetallkathode mit der Struktur des Typs LiCoO₂ bereitgestellt wird; und das Lithiumborat mit der Lithiumübergangsmetalloxidkathode gemischt und auf eine Temperatur im Bereich zwischen 250 °C und 450 °C erhitzt wird und die Menge an Lithiumborat größer als ungefähr 0,01 %, aber weniger als 2 % des Gewichts der Lithiumübergangsmetalloxidkathode ist.

12. Verfahren gemäß Anspruch 11, wobei das Lithiumübergangsmetalloxid aus der feste Lösung-Serie LiNiₓCo₁₋ₓO₂ (0 ≤ x ≤ 1) ausgewählt ist.

13. Verfahren gemäß Anspruch 11, wobei das Lithiumübergangsmetalloxid LiCoO₂ ist.

14. Verfahren gemäß einem der Ansprüche 11 bis 13, wobei eine wässerige Lithiumboratlösung mit der Lithiumeinfügungsverbindungskathode gemischt wird.

15. Verfahren gemäß einem der Ansprüche 11 bis 13, wobei eine kleine Menge an Lithiumborat in einer Kugelmühle mit Medien mit der Lithiumeinfügungsverbindungskathode trocken gemischt wird.

16. Verfahren gemäß einem der Ansprüche 11 bis 15, wobei die Anode eine kohlenstoffhaltige Einfügungsverbindung beinhaltet.

17. Verfahren gemäß Anspruch 16, wobei die kohlenstoffhaltige Einfügungsverbindung Graphit ist.

18. Verfahren gemäß einem der Ansprüche 11 bis 17, wobei das Lithiumsalz LiPF₆ ist.

19. Verfahren gemäß einem der Ansprüche 11 bis 18, wobei das nichtwässerige Lösungsmittel ein zyklisches und/oder lineares organisches Carbonat beinhaltet.

20. Verfahren gemäß Anspruch 19, wobei das nichtwässerige Lösungsmittel eine Mischung aus Ethylencarbonat, Propylencarbonat, Diethylcarbonat, Ethylmethylcarbonat und Dimethylcarbonat ist.

## Revendications

1. Une batterie au lithium rechargeable non aqueuse (15) présentant un taux de perte progressive de capacité réduit au cours du cycle, la batterie incluant une cathode à base de composé d'insertion du lithium (1), une anode à base de lithium ou de composé du lithium (2), un séparateur (3), un électrolyte non aqueux incluant un sel de lithium dissous dans un solvant non aqueux, et une quantité de borate de lithium dispersée sur la surface du matériau actif de cathode **caractérisée en ce que**
la cathode à base de composé d'insertion du lithium est une cathode à base d'oxyde de métal de transition au lithium ayant une structure de type LiCoO₂ ;
le borate de lithium est mélangé avec le matériau de cathode à base de composé d'insertion du lithium et chauffé jusqu'à une température comprise dans la gamme allant de 250 °C à 450 °C, afin d'obtenir ladite cathode ; et
la quantité de borate de lithium est supérieure à environ 0,01 %, mais inférieure à 2 % du poids de la cathode à base de composé d'insertion du lithium.

2. Une batterie au lithium rechargeable non aqueuse telle que revendiquée dans la revendication 1 dans laquelle l'oxyde de métal de transition au lithium est un élément de la série de solution solide LiNiₓCo₁₋ₓO₂ (0 ≤ x ≤1).

3. Une batterie au lithium rechargeable non aqueuse telle que revendiquée dans la revendication 1 dans laquelle l'oxyde de métal de transition au lithium est LiCoO₂.

4. Une batterie au lithium rechargeable non aqueuse telle que revendiquée dans n'importe quelle revendication, dans laquelle une solution aqueuse de borate de lithium est mélangée avec la cathode à base de composé d'insertion du lithium.

5. Une batterie au lithium rechargeable non aqueuse telle que revendiquée dans n'importe lesquelles des revendications 1 à 3, dans laquelle une petite quantité de borate de lithium et la cathode à base de composé d'insertion du lithium sont mélangées à sec dans un broyeur à galets avec des milieux.

6. Une batterie au lithium rechargeable non aqueuse telle que revendiquée dans n'importe quelle revendication précédente, dans laquelle l'anode comprend un composé d'insertion carboné.

7. Une batterie au lithium rechargeable non aqueuse telle que revendiquée dans la revendication 6, dans laquelle le composé d'insertion carboné est le graphite.

8. Une batterie au lithium rechargeable non aqueuse telle que revendiquée dans n'importe quelle revendication précédente, dans laquelle le sel de lithium est LiPF₆.

9. Une batterie au lithium rechargeable non aqueuse telle que revendiquée dans n'importe quelle revendication, dans laquelle le solvant non aqueux comprend un carbonate organique cyclique et/ou linéaire.

10. Une batterie au lithium rechargeable non aqueuse telle que revendiquée dans la revendication 9, dans laquelle le solvant non aqueux est un mélange de carbonate d'éthylène, de carbonate de propylène, de carbonate de diéthyle, de carbonate de méthyléthyle et de carbonate de diméthyle.

11. Une méthode destinée à réduire le taux de perte progressive de capacité au cours du cycle d'une batterie au lithium rechargeable non aqueuse, la batterie ayant une cathode à base de composé d'insertion du lithium, une anode à base de lithium ou de composé du lithium, un séparateur, et un électrolyte non aqueux incluant un sel de lithium dissous dans un solvant non aqueux et une quantité de borate de lithium dans la cathode, **caractérisée en ce que** : la cathode à base de composé d'insertion du lithium est fournie en tant que cathode à base de métal de transition au lithium présentant une structure de type LiCoO₂ et le borate de lithium est mélangé avec la cathode à base d'oxyde de métal de transition au lithium et chauffé jusqu'à une température comprise dans la gamme allant de 250 °C à 450 °C et la quantité de borate de lithium est supérieure à environ 0,01 %, mais pas inférieure à 2 % du poids de la cathode à base d'oxyde de métal de transition au lithium.

12. Une méthode telle que revendiquée dans la revendication 11 dans laquelle l'oxyde de métal de transition au lithium est sélectionné à partir de la série de solution solide LiNₓCo₁₋ₓO₂ (0 ≤ x ≤ 1).

13. Une méthode telle que revendiquée dans la revendication 11 dans laquelle l'oxyde de métal de transition au lithium est LiCoO₂.

14. Une méthode telle que revendiquée dans n'importe lesquelles des revendications 11 à 13 dans laquelle une solution aqueuse de borate de lithium est mélangée avec la cathode à base de composé d'insertion du lithium.

15. Une méthode telle que revendiquée dans n'importe lesquelles des revendications 11 à 13 dans laquelle une petite quantité de borate de lithium est mélangée à sec dans un broyeur à galets avec des milieux avec la cathode à base de composé d'insertion du lithium.

16. Une méthode telle que revendiquée dans n'importe lesquelles des revendications 11 à 15 dans laquelle l'anode comprend un composé d'insertion carboné.

17. Une méthode telle que revendiquée dans la revendication 16 dans laquelle le composé d'insertion carboné est le graphite.

18. Une méthode telle que revendiquée dans n'importe lesquelles des revendications 11 à 17 dans laquelle le sel de lithium est LiPF₆.

19. Une méthode telle que revendiquée dans n'importe lesquelles des revendications 11 à 18 dans laquelle le solvant non aqueux comprend un carbonate organique cyclique et/ou linéaire.

20. Une méthode telle que revendiquée dans la revendication 19 dans laquelle le solvant non aqueux est un mélange de carbonate d'éthylène, de carbonate de propylène, de carbonate de diéthyle, de carbonate de méthyléthyle et de carbonate de diméthyle.
